# FASCICULE DE BREVET EUROPEEN

(11) **EP 3 839 643 B1**
(45) Date de publication et mention de la délivrance du brevet: **21.02.2024**
(21) Numéro de dépôt: 19218863.9
(22) Date de dépôt: 20.12.2019
(51) Int. Cl.: G04B 1/14, G04B 17/06

(54) **COMPOSANT HORLOGER FLEXIBLE ET MOUVEMENT D'HORLOGERIE COMPORTANT UN TEL COMPOSANT**
FLEXIBLE UHRWERKSKOMPONENTE UND EINE SOLCHE KOMPONENTE UMFASSENDES UHRWERK
FLEXIBLE TIMEPIECE COMPONENT AND CLOCKWORK COMPRISING SUCH A COMPONENT

(43) Date de publication de la demande: 23.06.2021
(73) Titulaire: The Swatch Group Research and Development Ltd, 2074 Marin (CH)
(72) Inventeur: CUSIN, M. Pierre, 1423 Villars-Burquin (CH); CHARBON, M. Christian, 2054 Chézard-St-Martin (CH); HAEMMERLI, M. Alexandre, 2000 Neuchâtel (CH); PARATTE, M. Lionel, CH-2074 Marin-Epagnier (CH); IMBODEN, Matthias, 2072 St-Blaise (CH)
(74) Mandataire: ICB SA

(56) Documents cités:
- WO-A1-2017/096094
- WO-A1-2017/220672
- CN-A- 107 698 937
- US-A- 2 662 612
- US-A1- 2018 327 919

## Description

### Domaine de l'invention

La présente invention est relative aux composants horlogers flexibles pour mécanisme oscillateur ou pour barillet d'un mouvement d'horlogerie.

L'invention se rapporte également à un mouvement d'horlogerie comportant un tel composant.

### Arrière-plan de l'invention

Les mouvements horlogers mécaniques comprennent généralement un barillet, un mécanisme d'échappement et un mécanisme oscillateur mécanique. Le barillet comprend un ressort pour fournir de l'énergie au mécanisme oscillateur. Le mécanisme d'échappement comporte, notamment, une ancre et une roue d'échappement, tandis que le mécanisme oscillateur comprend généralement un ressort spiral associé à une masse inertielle oscillante appelée balancier.

Les progrès techniques dans les matériaux composites permettent de fabriquer certains composants dans des matériaux innovants et performants, qui permettent de se passer, au moins en partie, des matériaux purement métalliques. Aujourd'hui, on essaye d'utiliser, par exemple, des nanotubes de carbone pour fabriquer des composants. De tels matériaux apportent des avantages en terme de légèreté, de solidité, et de simplicité de fabrication. Ainsi, le document JP2008116205A décrit un ressort spiral comprenant une matrice de graphite et de carbone amorphe, renforcée par des nanotubes de carbone qui sont dispersés dans la matrice et alignés dans la direction longitudinale du spiral, soit dans le sens des contraintes élastiques principales.

Le document WO2017/220672 divulgue des composants horlogers flexibles formés d'une matrice dans laquelle des nanotubes sont formés, ces nanotubes étant disposés selon une direction perpendiculaire au plan des composants horlogers.

Dans la publication de N. Hutchison et al (MEMS 2009), un matériau composite est formé, d'une part, d'une forêt de nanotubes de carbone alignés verticalement (VACNT), et d'autre part, d'un deuxième matériau de remplissage entre les nanotubes, principalement du carbone, accessoirement du silicium, voire du nitrure de silicium. Le matériau de remplissage détermine principalement les propriétés mécaniques du matériau composite.

Cependant, ces matériaux sont limités à l'utilisation de nanotubes, qui sont généralement vides. Or, il n'est pas toujours aisé de fabriquer des nanotubes dans d'autres matériaux que le carbone.

### Résumé de l'invention

Un but de l'invention est, par conséquent, de proposer un composant horloger, qui évite les problèmes précités.

A cet effet, l'invention concerne un composant horloger pour mécanisme oscillateur ou pour barillet d'un mouvement horloger, le composant comportant au moins une partie réalisée en une matière composite.

Le composant est remarquable en ce que la matière composite comprend une matrice et une multitude de nano-fils répartis dans la matrice, les nano-fils étant juxtaposés, la matrice comportant un matériau de remplissage des interstices entre les nano-fils pour les joindre les uns aux autres, chaque nano-fil formant un tube plein monobloc.

Ainsi, grâce à une telle matière composite, on obtient des nano-fils monoblocs pleins, de sorte que l'on peut utiliser toute sorte de matériaux pour fabriquer ces nano-fils. On peut de plus fabriquer les nano-fils aisément, de manière plus simple que des nanotubes dans certaines matières. Par conséquent, il est possible de réaliser certains éléments d'un mouvement horloger, qui doivent pouvoir fléchir, tels un ressort spiral ou un ressort de barillet.

Les nano-fils sont disposées de manière sensiblement parallèle à un axe sensiblement perpendiculaire au plan du composant.

Selon une forme de réalisation avantageuse, les nano-fils sont réalisés dans un élément à choisir dans la liste suivante : de l'or, du palladium, du silicium, du diamant poly-cristallin, du nitrure de bore, du nitrure de gallium, du nitrure de silicium, de l'oxyde de zinc, de l'arséniure de gallium, du sulfure de tungstène, de l'argent, du cuivre, de l'arséniure de manganèse, de l'arséniure d'indium, du nickel, du platine, du germanium, des alliages de cobalt-graphène, de phosphore-germanium, de cuivre-argent, d'or-argent, des composés de phosphore-indium, d'azote-gallium, d'azote-indium-gallium, d'azote-arsenic-gallium, d'arsenic-gallium, de phosphore-indium-gallium, de souffre-cadmium, de souffre-cadmium-sélénium, d'azote-aluminium-gallium, de césium-plomb, du tellurure d'antimoine, du tellurure de bismuth, de l'oxyde de silicium, de l'oxyde de titane, de l'oxyde de tungstène, de l'oxyde d'indium, de l'oxyde d'aluminium, de l'oxyde de magnésium, de l'oxyde d'étain, de l'oxyde de zinc, du niobate de lithium, de l'oxyde de manganèse, des composés inorganiques de type Li₂Mo₆Se₆ ou Mo₆S₉₋ₓIₓ. Il est aussi possible de réaliser des nanofils en alliage métallique amorphe ou partiellement amorphe.

Selon une forme de réalisation avantageuse, les nano-fils ont un diamètre compris dans un intervalle allant de 1 à 50 nm, de préférence dans un intervalle allant de 3 à 15 nm, voire de 5 à 10 nm.

Selon une forme de réalisation avantageuse, les nano-fils ont une longueur comprise dans un intervalle allant de 100 à 500 microns, de préférence dans un intervalle allant de 100 à 300 microns, voire de 150 à 200 microns.

Selon une forme de réalisation avantageuse, le matériau de remplissage est réalisé dans un élément à choisir dans la liste suivante : du tungstène, des matériaux organiques comme le parylène, du nitrure de bore hexagonal, du rubis poly-cristallin de type Al2O3, du diamant, des bisulfures de tungstène ou de molybdène, du graphite, du plomb, du carbure de silicium, du nickel, du phosphure d'indium, de l'oxyde de titane, du poly-silicone, du carbone amorphe, du carbone amorphe de type DLC (Diamond-like-carbon), de l'oxyde d'hafnium, de l'oxyde de silicium, du silicium poly-cristallin, du titanate de strontium, de l'oxyde de zinc, de l'oxyde d'indium, de l'oxyde de tungstène, de l'oxyde de niobium, de l'oxyde de cadmium, du fluorure de magnésium, du nitrure de titane, du nitrure de silicium, du nitrure d'aluminium, du nitrure de galium, du nitrure d'hafnium, du nitrure de calcium, du nitrure d'argent, du nitrure de silicium oxydé, du platine, du palladium, du molybdène, du tantale, du sulfure de zinc, du sulfure de molybdène, du germanium, de l'hydrofluorocarbure, des composés de type AlP, AIN, AlGaSb, AlGaAs, AlGaInP, AIGaN, AlGaP, GaSb, GaAsP, GaAs, GaN, GaP, InAlAs, InAlP, InSb, InGaSb, InGaN, GalnAIAs, GalnAIN, GalnAsN, GalnAsP, GaInAs, GalnP, InN, InP, InAs, InAsSb, ZnSe, HgCdTe, GeSbTe.

Selon une forme de réalisation avantageuse, le composant est un ressort spiral de mécanisme oscillateur.

Selon une forme de réalisation avantageuse, le composant est un ressort de barillet.

L'invention se rapporte également à un mouvement horloger comprenant un composant horloger flexible selon l'invention.

### Description sommaire des dessins

D'autres caractéristiques et avantages de la présente invention apparaîtront à la lecture de plusieurs formes de réalisation données uniquement à titre d'exemples non limitatifs, en référence aux dessins annexés dans lesquels :
- la figure 1 représente schématiquement une vue traversante en perspective d'une matière composite selon l'invention,
- la figure 2 représente une vue en perspective d'un balancier muni d'un ressort spiral d'un mécanisme oscillateur mécanique,
- la figure 3 représente schématiquement une vue en perspective d'un barillet muni d'un ressort d'un barillet.

### Description détaillée de modes de réalisation préférés

Dans la description, nous présentons des composants pour un mouvement horloger. Le composant est un composant flexible à choisir dans une liste comprenant par exemple un ressort spiral de mécanisme oscillateur ou un ressort de barillet.

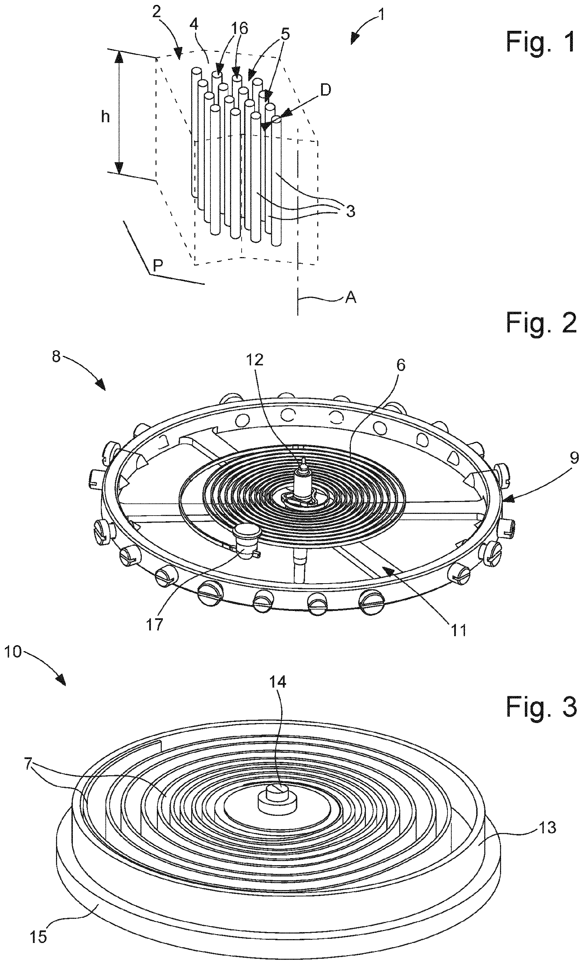

Le composant flexible comporte au moins une partie réalisée en une matière composite 1, représentée sur la figure 1. De préférence, le composant est réalisé entièrement dans cette matière composite 1. Ainsi, les composants de la liste précédentes peuvent être réalisés dans cette matière composite 1.

La matière composite 1 comprend une matrice de remplissage 2 et une multitude de nano-fils 3 réparties dans ladite matrice 2. La matrice 2 a, par exemple, une forme généralement plate s'étendant dans un plan A.

Les nano-fils 3 forment une structure de la matière composite 1, dans laquelle ils sont juxtaposés. Ils sont régulièrement répartis de manière à être espacés les uns des autres de façon homogène dans la matrice 2. On entend par nano-fils des tubes monoblocs généralement pleins. Ainsi, l'intérieur 16 des nano-fils 3 comprend le même matériau que l'enveloppe externe.

Les nano-fils 3 sont disposés sensiblement parallèlement les uns aux autres. Ils sont sensiblement perpendiculaires au plan P du composant. Ils sont disposés de manière sensiblement parallèle à un axe A, perpendiculaire au plan P du composant. Par sensiblement parallèle, on entend que les fils sont orientés sensiblement dans la même direction.

Avantageusement, la matière composite est réalisée de manière à ce que des nano-fils 3 soient présents dans toute la masse de la matrice 2.

Les nano-fils 3 ont, par exemple, un diamètre D compris dans un intervalle allant de 2 à 50 nm. De préférence, les nano-fils 3 ont un diamètre compris dans un intervalle allant de 3 à 15 nm, voire de 5 à 10 nm.

Les nano-fils 3 peuvent avoir une longueur L comprise dans un intervalle allant de 100 à 500 microns. De préférence, les nano-fils 3 ont une longueur comprise dans un intervalle allant de 100 à 300 microns, voire de 150 à 200 microns.

Les nano-fils 3 sont réalisés dans un matériau à choisir dans la liste suivante : de l'or, du palladium, du silicium, du diamant, du nitrure de bore, du nitrure de gallium, du nitrure de silicium, de l'oxyde de zinc, de l'arséniure de gallium, du sulfure de tungstène, de l'argent, du cuivre, de l'arséniure de manganèse, de l'arséniure d'indium, du nickel, du platine, du germanium, des alliages de cobalt-graphène, de phosphore-germanium, de cuivre-argent, d'or-argent, des composés de phosphore-indium, d'azote-gallium, d'azote-indium-gallium, d'azote-arsenic-gallium, d'arsenic-gallium, de phosphore-indium-gallium, de souffre-cadmium, de souffre-cadmium-sélénium, d'azote-aluminium-gallium, de césium-plomb, du tellurure d'antimoine, du tellurure de bismuth, de l'oxyde de silicium, de l'oxyde de titane, de l'oxyde de tungstène, de l'oxyde d'indium, de l'oxyde d'aluminium, de l'oxyde de magnésium, de l'oxyde d'étain, de l'oxyde de zinc, du niobate de lithium, de l'oxyde de manganèse, des composés inorganiques de type Li₂Mo₆Se₆ ou Mo₆S₉₋ₓIₓ. Il est aussi possible de réaliser des nanofils en alliage métallique amorphe ou partiellement amorphe. Cette liste n'est pas exhaustive, d'autres matériaux étant également possibles.

La matrice 2 comporte un matériau de remplissage 4 pour remplir les interstices 5 entre les nano-fils 3. Le matériau de remplissage 4 peut avantageusement englober les nano-fils 3, en étant injecté dans les interstices 5 entre les nano-fils 3. Ce matériau 4 détermine principalement les propriétés mécaniques de la matière composite 1, en particulier pour rendre la matrice 2 flexible.

Le matériau de remplissage 4 composant la matrice 2 est réalisé avec un élément de la liste suivante : du tungstène, des matériaux organiques comme le parylène, du nitrure de bore hexagonal, du rubis poly-cristallin de type Al2O3, du diamant poly-cristallin, des bisulfures de tungstène ou de molybdène, du graphite, du plomb, du carbure de silicium, du nickel, du phosphure d'indium, de l'oxyde de titane, du poly-silicone, du carbone amorphe, du carbone amorphe de type DLC (Diamond-like-carbon), de l'oxyde d'hafnium, de l'oxyde de silicium, du silicium poly-cristallin du titanate de strontium, de l'oxyde de zinc, de l'oxyde d'indium, de l'oxyde de tungstène, de l'oxyde de niobium, de l'oxyde de cadmium, du fluorure de magnésium, du nitrure de titane, du nitrure de silicium, du nitrure d'aluminium, du nitrure de galium, du nitrure d'hafnium, du nitrure de calcium, du nitrure d'argent, du nitrure de silicium oxydé, du platine, du palladium, du molybdène, du tantale, du sulfure de zinc, du sulfure de molybdène, du germanium, de l'hydrofluorocarbure, des composés de type AlP, AIN, AlGaSb, AlGaAs, AlGaInP, AIGaN, AlGaP, GaSb, GaAsP, GaAs, GaN, GaP, InAlAs, InAlP, InSb, InGaSb, InGaN, GalnAIAs, GalnAIN, GalnAsN, GalnAsP, GaInAs, GalnP, InN, InP, InAs, InAsSb, ZnSe, HgCdTe, GeSbTe. Le matériau de remplissage 4 peut avantageusement être constitué également de carbone. Cette liste n'est pas exhaustive, d'autres matériaux étant également possibles.

Le matériau de remplissage 4 est flexible, le matériau 4 ayant des propriétés mécaniques permettant une déformation élastique du composant. La flexibilité est en outre obtenue grâce à la géométrie du composant, en particulier par l'épaisseur du composant. On entend par matériau flexible, un matériau qui peut être utilisé pour former un composant flexible d'horlogerie, tel qu'un spiral ou un ressort. La flexibilité dépend aussi de la géométrie du composant et du rapport de la rigidité sur la densité.

Pour certains matériaux de remplissage, par exemple un métal, le matériau a un module d'élasticité élevé, supérieur à 100 Gpa, de préférence supérieur à 200GPa, et a une limite à la rupture également élevée, supérieure à 1GPa, de préférence supérieure à 2 GPa.

Dans d'autres exemples de matériaux de remplissage, par exemple le parylène, le matériau a un module d'élasticité plus faible, compris entre 0.1 Mpa et 100 Gpa, et a une limite à la rupture plus faible, comprise entre 200 MPa et 1GPa.

Le composant est par exemple un ressort spiral 6 d'un mécanisme oscillateur 8 d'un mouvement d'horlogerie, ou un ressort 7 d'un barillet 10 d'un mouvement d'horlogerie.

Nous citons des exemples d'association de matériaux de remplissage et de nano-fils offrant des propriétés particulièrement avantageuses.

Un premier exemple porte sur des nano-fils en cuivre et un matériau de remplissage en alumine (rubis, Al2O3), le cuivre permettant d'évacuer les charges électrostatiques, tout en gardant des propriétés de rigidité et de résistance élevée de l'alumine pour le composant.

Dans un second exemple, les nano-fils sont en métal et le matériau de remplissage en Al2O3, le métal permettant de modifier la couleur du composant.

Des nano-fils en silicium et un matériau de remplissage en oxyde de silicium permettent de modifier la dépendance thermique de l'élasticité, en particulier pour ajuster la compensation thermique de la fréquence propre d'un oscillateur mécanique.

Enfin, un matériau de remplissage en parylène ou en un autre polymère (Teflon, POM, etc) permet d'obtenir un composant glissant ayant un coefficient de frottement sec réduit, ce qui est utile pour certaines des applications où le frottement entre deux mobiles doit être réduit, et/ou l'apport d'un lubrifiant standard ne ferait que dégrader le frottement et augmenter l'usure, par exemple dans un composant antichoc.

Selon les combinaisons, la matière composite permet notamment de fabriquer des ressorts. Les figures 2 et 3 sont des exemples de tels ressorts pour l'horlogerie. D'autres composants sont également possibles, tels que des composants antichocs, par exemple pour un axe de balancier, ou encore un élément résonateur d'un mécanisme de sonnerie d'horlogerie.

La figure 2 représente un oscillateur horloger mécanique, comportant un ressort spiral 6 et un balancier 8. Le ressort spiral 6 est réalisé à partir d'une telle matière composite flexible. Le ressort spiral 6 est un ruban de faible rapport de la largeur sur la hauteur, qui est enroulé en spirale, de sorte qu'il existe un espace libre entre les portions de ruban en vis à vis. Ainsi, par contraction et déformation de la spirale, on obtient l'effet ressort recherché. Le balancier 8 comprend un anneau 9 circulaire et un bras 11 rectiligne passant au centre de l'anneau 9 et reliant deux côtés opposés de l'anneau 9. Le bras maintient un axe 12 sensiblement perpendiculaire au plan de l'anneau 9. L'axe 12 porte le ressort spiral 6 dans un plan parallèle à celui de l'anneau 9 par une première extrémité. La deuxième extrémité est destinée à être fixée à une autre partie fixe 17 du mouvement horloger, appelée piton.

La figure 3 représente un ressort-barillet 10 formé d'un ressort de barillet 7 réalisé à partir d'une telle matière composite flexible telle que décrite précédemment. Le barillet 10 comprend un boitier 13 circulaire sensiblement plat, muni d'une denture d'engrenage 15 sur sa partie externe, et d'un axe 14 traversant le centre du boitier 13 perpendiculairement au plan du boitier 13. Le ressort a une forme de spirale sensiblement identique à celle du ressort spiral décrit précédemment pour la figure 2, mais avec des dimensions différentes pour répondre à sa fonction de réserve et de fournisseur d'énergie mécanique au mouvement d'horlogerie. Le ressort 7 est agencé à l'intérieur du boitier 13 en étant fixé d'une part à l'axe 14 par une extrémité, et au bord périphérique intérieure du boitier 13.

Concernant la fabrication des nano-fils, on utilise les techniques classiques liées au matériau choisi dans la liste, tels que la croissance catalytique, la gravure chimique, le dépôt électrochimique (électrodéposition), ou la gravure profonde par plasma réactif. On utilise, de préférence, le dépôt de couches minces, par exemple par dépôt chimique de type CVD (Chemical Vapor Déposition) ou par dépôt physique de type PVD (Physical Vapor Déposition). Comme dans le premier mode de réalisation, on utilise des méthodes de photolithographie pour définir les contours du composant sur un substrat, par exemple en silicium, où l'on fait croître les nano-fils. Après l'obtention des nano-fils, on insère le matériau flexible entre les nano-fils. Enfin, le composant est détaché du substrat une fois qu'il est terminé.

La demande de brevet internationale WO 2014/172660 donne un exemple de réalisation de nano-fils de silice.

Les nano-fils 3 peuvent aussi être réalisés par d'autres techniques que la croissance catalytique, telles que celles décrites dans la publication de N.Hutchison (MEMS 2009).

Le matériau de remplissage est inséré entre les nano-fils par des procédés de type ALD (atomic layer déposition), LPCVD (Low Pressure Chemical Vapor Déposition), MOCVD (moderate pressure CVD), par dépôt électrochimique (électro-déposition), par CVD ou par trempage dans une phase liquide ou gazeuse.

Naturellement, l'invention n'est pas limitée aux modes de réalisation décrits en référence aux figures et des variantes pourraient être envisagées sans sortir du cadre de l'invention telle que définie par les revendications annexées.

## Revendications

1. Composant horloger (6, 7) flexible pour mécanisme oscillateur ou pour barillet d'un mouvement horloger, le composant horloger (6, 7) comportant au moins une partie réalisée en une matière composite (1), dans lequel la matière composite (1) comprend une matrice (2) et une multitude de nano-fils (3) repartis dans la matrice (2), la matrice (2) ayant une forme généralement plate s'étendant sensiblement dans un plan (P), les nano-fils (3) étant juxtaposés, la matrice (2) comportant un matériau (4) de remplissage des interstices (5) entre les nano-fils (3) pour les joindre les uns aux autres, chaque nano-fil (3) formant un tube plein monobloc, les nano-fils (3) étant disposés de manière sensiblement parallèle à un axe (A) sensiblement perpendiculaire au plan (P).

2. Composant (6, 7) selon la revendication 1, **caractérisé en ce que** les nano-fils (3) sont réalisés dans un élément à choisir dans la liste suivante : de l'or, du palladium, du silicium, du diamant, du nitrure de bore, du nitrure de gallium, du nitrure de silicium, de l'oxyde de zinc, de l'arséniure de gallium, du sulfure de tungstène, de l'argent, du cuivre, de l'arséniure de manganèse, de l'arséniure d'indium, du nickel, du platine, du germanium, des alliages de cobalt-graphène, de phosphore-germanium, de cuivre-argent, d'or-argent, des composés de phosphore-indium, d'azote-gallium, d'azote-indium-gallium, d'azote-arsenic-gallium, d'arsenic-gallium, de phosphore-indium-gallium, de souffre-cadmium, de souffre-cadmium-sélénium, d'azote-aluminium-gallium, de césium-plomb, du tellurure d'antimoine, du tellurure de bismuth, de l'oxyde de silicium, de l'oxyde de titane, de l'oxyde d'aluminium, de l'oxyde de magnésium, de l'oxyde de tungstène, de l'oxyde d'indium, de l'oxyde d'étain, de l'oxyde de zinc, du niobate de lithium, de l'oxyde de manganèse, des composés inorganiques de type Li₂Mo₆Se₆ ou Mo₆S₉₋ₓIₓ., des alliages métalliques amorphes ou partiellement amorphes.

3. Composant (6, 7) selon l'une, quelconque, des revendications précédentes, **caractérisé en ce que** les nano-fils (3) ont un diamètre (D) compris dans un intervalle allant de 2 à 50 nm, de préférence dans un intervalle allant de 3 à 15 nm, voire de 5 à 10 nm.

4. Composant (6, 7) selon l'une, quelconque, des revendications précédentes, **caractérisé en ce que** les nano-fils (3) ont une longueur (L) comprise dans un intervalle allant de 100 à 500 microns, de préférence dans un intervalle allant de 100 à 300 microns, voire de 150 à 200 microns.

5. Composant (6, 7) selon l'une, quelconque, des revendications précédentes, **caractérisé en ce que** le matériau de remplissage (4) est réalisé dans un élément à choisir dans la liste suivante : du tungstène, des matériaux organiques comme le parylène, du nitrure de bore hexagonal, du rubis poly-cristallin de type Al2O3, du diamant poly-cristallin, du silicium poly-cristallin, des bisulfures de tungstène ou de molybdène, du graphite, du plomb, du carbure de silicium, du nickel, du phosphure d'indium, de l'oxyde de titane, du poly-silicone, du carbone amorphe, du carbone amorphe de type DLC (Diamond-like-carbon), de l'oxyde d'hafnium, de l'oxyde de silicium, du titanate de strontium, de l'oxyde de zinc, de l'oxyde d'indium, de l'oxyde de tungstène, de l'oxyde de niobium, de l'oxyde de cadmium, du fluorure de magnésium, du nitrure de titane, du nitrure de silicium, du nitrure d'aluminium, du nitrure de galium, du nitrure d'hafnium, du nitrure de calcium, du nitrure d'argent, du nitrure de silicium oxydé, du platine, du palladium, du molybdène, du tantale, du sulfure de zinc, du sulfure de molybdène, du germanium, de l'hydrofluorocarbure, des composés de type AIP, AIN, AlGaSb, AlGaAs, AlGaInP, AIGaN, AlGaP, GaSb, GaAsP, GaAs, GaN, GaP, InAlAs, InAlP, InSb, InGaSb, InGaN, GalnAIAs, GalnAIN, GalnAsN, GalnAsP, GaInAs, GalnP, InN, InP, InAs, InAsSb, ZnSe, HgCdTe, GeSbTe.

6. Composant (6) selon l'une, quelconque, des revendications précédentes, **caractérisé en ce qu'**il est un ressort spiral de balancier (8).

7. Composant (7) selon l'une, quelconque, des revendications 1 à 5 **caractérisé en ce qu'**il est un ressort de barillet (10).

8. Mouvement horloger, **caractérisé en ce qu'**il comprend un composant horloger flexible (6, 7) selon l'une, quelconque, des revendications précédentes.

## Patentansprüche

1. Flexible Uhrenkomponente (6, 7) für einen Oszillatormechanismus oder für ein Federhaus eines Uhrwerks, wobei die Uhrenkomponente (6, 7) mindestens einen Teil aufweist, der aus einem Verbundmaterial (1) hergestellt ist, wobei das Verbundmaterial (1) eine Matrix (2) und eine Vielzahl von in der Matrix (2) verteilten Nanodrähten (3) umfasst, wobei die Matrix (2) in im Allgemeinen flache Form aufweist, die sich im Wesentlichen in einer Ebene (P) erstreckt, wobei die Nanodrähte (3) nebeneinander angeordnet sind, wobei die Matrix (2) ein Material (4) zum Füllen der Zwischenräume (5) zwischen den Nanodrähten (3) umfasst, um sie miteinander zu verbinden, wobei jeder Nanodraht (3) ein einteiliges Vollrohr bildet, wobei die Nanodrähte (3) im Wesentlichen parallel zu einer Achse (A) angeordnet sind, die im Wesentlichen senkrecht zur Ebene (P) ist.

2. Komponente (6, 7) nach Anspruch 1, **dadurch gekennzeichnet, dass** die Nanodrähte (3) aus einem aus der folgenden Liste auszuwählenden Element hergestellt sind: Gold, Palladium, Silizium, Diamant, Bornitrid, Galliumnitrid, Siliziumnitrid, Zinkoxid, Galliumarsenid, Wolframsulfid, Silber, Kupfer, Manganarsenid, Indiumarsenid, Nickel, Platin, Germanium, Kobalt-Graphen-, Phosphor-Germanium-, Kupfer-Silber-, Gold-Silber-Legierungen, Phosphor-Indium-, Stickstoff-Gallium-, Stickstoff-Indium-Gallium-, Stickstoff-Arsen-Gallium-, Arsen-Gallium-, Phosphor-Indium-Gallium-, Schwefel-Cadmium-, Schwefel-Cadmium-Selen-, Stickstoff-Aluminium-Gallium-, Cäsium-Blei-, Antimontellurid-, Wismuttellurid-, Siliziumoxid-, Titanoxid-, Aluminiumoxid-, Magnesiumoxid-, Wolframoxid-, Indiumoxid-, Zinnoxid-, Zinkoxid-, Lithiumniobat-, Manganoxidverbindungen, anorganische Verbindungen vom Typ Li₂Mo₆Se₆ oder Mo₆S₉₋ₓIₓ, amorphe oder teilweise amorphe Metalllegierungen.

3. Komponente (6, 7) nach einem der vorhergehenden Ansprüche1, **dadurch gekennzeichnet, dass** die Nanodrähte (3) einen Durchmesser (D) im Bereich von 2 bis 50 nm, vorzugsweise im Bereich von 3 bis 15 nm oder sogar von 5 bis 10 nm aufweisen.

4. Komponente (6, 7) nach einem der vorhergehenden Ansprüche, **dadurch gekennzeichnet, dass** die Nanodrähte (3) eine Länge (L) im Bereich von 100 bis 500 Mikrometern, vorzugsweise im Bereich von 100 bis 300 Mikrometern oder sogar 150 bis 200 Mikrometern aufweisen.

5. Komponente (6, 7) nach einem der vorhergehenden Ansprüche, **dadurch gekennzeichnet, dass** das Füllmaterial (4) aus einem aus der folgenden Liste auszuwählenden Element hergestellt ist: Wolfram, organische Materialien wie Parylen, hexagonales Bornitrid, polykristalliner Rubin des Typs Al2O3, polykristalliner Diamant, polykristallines Silizium, Wolfram- oder Molybdändisulfide, Graphit, Blei, Siliziumkarbid, Nickel, Indiumphosphid, Titanoxid, Polysilikon, amorpher Kohlenstoff, amorpher Kohlenstoff des DLC(Diamant-like Carbon)-Typs, Hafniumoxid, Siliziumoxid, Strontiumtitanat, Zinkoxid, Indiumoxid, Wolframoxid, Nioboxid, Cadmiumoxid, Magnesiumfluorid, Titannitrid, Siliziumnitrid, Aluminiumnitrid, Galliumnitrid, Hafniumnitrid, Kalziumnitrid, Silbernitrid, oxidiertes Siliziumnitrid, Platin, Palladium, Molybdän, Tantal, Zinksulfid, Molybdänsulfid, Germanium, Fluorkohlenwasserstoff, Verbindungen der Typen AlP, AlN, AlGaSb, AlGaAs, AlGaInP, AlGaN, AlGaP, GaSb, GaAsP, GaAs, GaN, GaP, InAlAs, InAIP, InSb, InGaSb, InGaN, GaInAlAs, GaInAIN, GaInAsN, GaInAsP, GaInAs, GaInP, InN, InP, InAs, InAsSb, ZnSe, HgCdTe, GeSbTe.

6. Komponente (6) nach einem der vorhergehenden Ansprüche, **dadurch gekennzeichnet, dass** sie eine spiralförmige Unruhfeder (8) ist.

7. Komponenten (7) nach einem der Ansprüche 1 bis 5, **dadurch gekennzeichnet, dass** sie eine Feder des Federhauses (10) ist.

8. Uhrwerk, **dadurch gekennzeichnet, dass** es eine flexible Uhrenkomponente (6, 7) nach einem der vorhergehenden Ansprüche umfasst.

## Claims

1. A flexible timepiece component (6, 7) for an oscillator mechanism or for a barrel of a horological movement, the timepiece component (6, 7) including at least a part made of a composite material (1), wherein the composite material (1) comprises a matrix (2) and a multitude of nanowires (3) distributed in the matrix (2), the matrix (2) having an overall flat shape extending substantially in a plane (P), the nanowires (3) being juxtaposed, the matrix (2) including a material (4) for filling the interstices (5) between the nanowires (3) to join them to each other, each nanowire (3) forming a solid one-piece tube, the nanowires (3) being disposed substantially parallel to an axis (A) substantially perpendicular to the plane (P).

2. The component (6, 7) according to claim 1, **characterised in that** the nanowires (3) are made of an element to be selected from the following list: gold, palladium, silicon, diamond, boron nitride, gallium nitride, silicon nitride, zinc oxide, gallium arsenide, tungsten sulphide, silver, copper, manganese arsenide, indium arsenide, nickel, platinum, and germanium, cobalt-graphene, phosphorus-germanium, copper-silver, and gold-silver alloys, phosphorus-indium, nitrogen-gallium, nitrogen-indium-gallium, nitrogen-arsenic-gallium, arsenic-gallium, phosphorus-indium-gallium, sulphur-cadmium, sulphur-cadmium-selenium, nitrogen-aluminium-gallium, and caesium-lead compounds, antimony telluride, bismuth telluride, silicon oxide, titanium oxide, aluminium oxide, magnesium oxide, tungsten oxide, indium oxide, tin oxide, zinc oxide, lithium niobate, manganese oxide, inorganic compounds of the Li₂Mo₆Se₆ or Mo₆S₉₋ₓIₓ type, amorphous or partially amorphous metal alloys.

3. The component (6, 7) according to any one of the preceding claims, **characterised in that** the nanowires (3) have a diameter (D) comprised within a range from 2 to 50 nm, preferably within a range from 3 to 15 nm, or even from 5 to 10 nm.

4. The component (6, 7) according to any one of the preceding claims, **characterised in that** the nanowires (3) have a length (L) comprised within a range from 100 to 500 microns, preferably within a range from 100 to 300 microns, or even from 150 to 200 microns.

5. The component (6, 7) according to any one of the preceding claims, **characterised in that** the filling material (4) is produced from an element to be selected from the following list: tungsten, organic materials such as parylene, hexagonal boron nitride, poly-crystalline ruby of the Al₂O₃ type, poly-crystalline diamond, poly-crystalline silicon, tungsten or molybdenum disulphides, graphite, lead, silicon carbide, nickel, indium phosphide, titanium oxide, poly-silicone, amorphous carbon, amorphous carbon of the DLC (Diamond-like-carbon) type, hafnium oxide, silicon oxide, strontium titanate, zinc oxide, indium oxide, tungsten oxide, niobium oxide, cadmium oxide, magnesium fluoride, titanium nitride, silicon nitride, aluminium nitride, gallium nitride, hafnium nitride, calcium nitride, silver nitride, oxidised silicon nitride, platinum, palladium, molybdenum, tantalum, zinc sulphide, molybdenum sulphide, germanium, hydrofluorocarbon, compounds of the AIP, AIN, AlGaSb, AlGaAs, AlGaInP, AlGaN, AlGaP, GaSb, GaAsP, GaAs, GaN, GaP, InAIAs, InAlP, InSb, InGaSb, InGaN, GaInAlAs, GaInAlN, GaInAsN, GaInAsP, GaInAs, GaInP, InN, InP, InAs, InAsSb, ZnSe, HgCdTe, GeSbTe type.

6. The component (6) according to any one of the preceding claims, **characterised in that** it is a spiral balance spring (8).

7. The component (7) according to any one of claims 1 to 5, **characterised in that** it is a barrel spring (10).

8. A horological movement, **characterised in that** it comprises a flexible timepiece component (6, 7) according to any one of the preceding claims.
